# EUROPEAN PATENT SPECIFICATION

(11) **EP 3 043 198 B1**
(45) Date of publication and mention of the grant of the patent: **29.08.2018**
(21) Application number: 15305007.5
(22) Date of filing: 06.01.2015
(51) Int. Cl.: G02B 6/42

(54) **Device for aligning and fastening an optical element coupled to an optoelectronic component**
Vorrichtung zur Ausrichtung und Befestigung eines optischen, an eine optoelektronische Komponente gekoppelten Elements
Dispositif pour aligner et fixer un élément optique couplé à un composant opto-électronique

(43) Date of publication of application: 13.07.2016
(73) Proprietor: Alcatel Lucent, 91620 Nozay (FR)
(72) Inventor: Goix, Michel, 91460 MARCOUSSIS (FR)
(74) Representative: Browne, Robin Forsythe

(56) References cited:
- GB-A- 2 128 768
- GB-A- 2 310 052

## Description

### TECHNICAL FIELD

The present invention pertains to a device for aligning the optical axis of an optical element with the optical axis of an optoelectronic component and for fastening the optical element into a coupling position with the optoelectronic component. This device also applies to situations in which the optoelectronic component is coupled to multiple optical elements.

### BACKGROUND

The optical component can be an optical fiber or a lens, for instance.
The active optoelectronic components concerned by the invention might be light-producing or light-detecting components which may be coupled to conductors of integrated circuits. The optoelectronic component may particularly be a semiconductor component, a laser diode, a light-emitting diode, a photodiode, or a phototransistor, for example. In order to associate this optoelectronic component with an optical fiber with optimal coupling, it is necessary to align the optical axis of the optical fiber on the optical axis of the optoelectronic component with extreme accuracy. However, due to the very small dimensions of the optoelectronic components, adjusting the alignment of the optical axes of the optical fiber and optoelectronic component is a very delicate operation, because in some cases it requires accuracy on the order of or less than 1 µm in all three axes. This is why this alignment is generally adjusted dynamically; i.e. the optical fiber is moved with a micromanipulator for adjusting its position while the optoelectronic device is operating. Furthermore, this coupling must be solid and maintain optimal alignment over time, despite changes in temperature and humidity.
The quality of the resulting coupling, meaning the ratio of the signal transferred by the coupling over the signal transmitted by the input optical fiber in the event of input coupling, is greater if the positioning of the end of the optical fiber relative to the optoelectronic component is well-adjusted. In practice, this requires very accurate positioning of the optical fiber relative to the optoelectronic component. The position of the optical fiber relative to the optoelectronic component must then remain optimal after fastening the optical fiber onto its mount. Furthermore, this coupling must be solid and maintain optimal alignment over time, despite changes in temperature and humidity.

The document EP2 588 908describes a positioning method consisting of:
- positioning the fiber in front of the optoelectronic component so that its axis is approximately coaxial with the optical axis of the optoelectronic component, within a solidifiable product;
- and then solidifying the product to fasten the fiber in this position.
This document also describes a positioning device comprising a notch on top of a support, this notch having a square section, and being filled up with the solidifiable product. This solidifiable product is either melted soft solder, or polymerizing glue. The position of the optical fiber is adjusted inside the notch until the transferred signal is maximal. Then the solidifiable product is solidified. So the fiber is fastened in the notch, in an appropriate position.
A drawback of this device is that the whole outer periphery of the fiber is not drawn uniformly in the radial directions because of the rectangular or square shape of the notch containing the solidifiable product. So forces of contraction are dissymmetric and move the optical fiber. The resulting alignment has not always the required accuracy.

The patent application EP13194668.3 that pertains to article 54(3) of the European Patent Convention, describes a positioning device that can provide symmetrical forces around the fiber.
**Figure 1** illustrates an embodiment of the positioning device described in this document. The positioning device 1 aligns the optical axis 2 of an optical fiber 3 with the optical axis 4 of an optoelectronic component 5; and fastens the optical fiber 3 in relation to the optoelectronic component 5. This device 1 comprises a base 6 construed and arranged to support a framework 7.
The frame work 7 comprises:
- a bore 9 construed and arranged to receive an optical fiber 3, the diameter of the bore 9 being greater than the diameter of the fiber 3;
- a tank 11 cut through the support 7, and arranged to contain a solidifiable product 17, that can be melted soft solder or polymerizing glue;
- and a duct cut through the support 7, and connected, at a first end, to said tank 11 and, at a second end, to the bore 9, so that solidifiable product 17 can migrate from the tank 11 to the bore 9 by capillarity action. The duct 13 can have any orientation. The solidifiable product 17 fills the gap between the bore 9 and the fiber 3 by capillarity action.

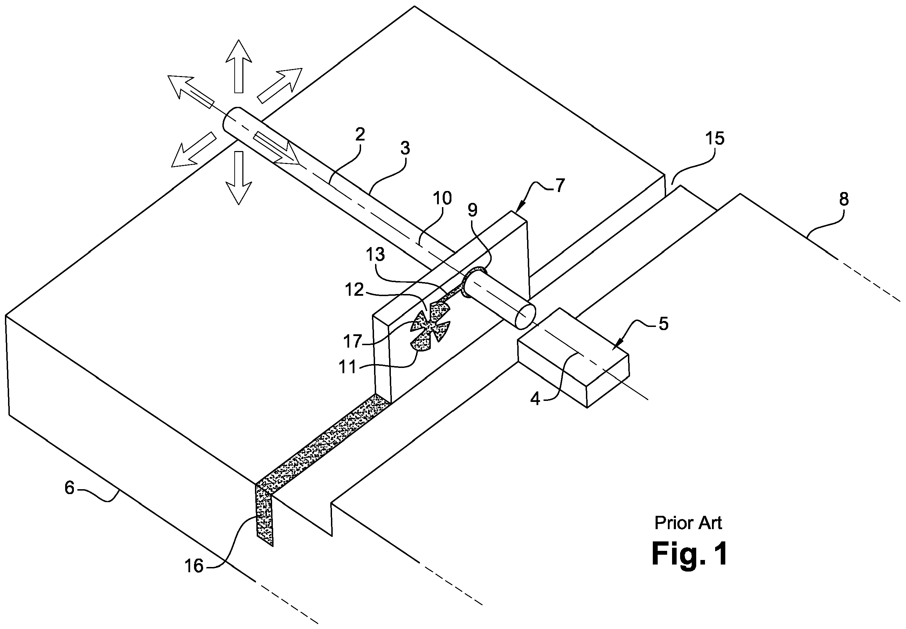

The positioning is made in two main steps:
- 1) The framework 7 is pre-positioned so that the axis 10 of the bore 9 is approximately coaxial with the optical axis 4 of the optoelectronic component 5. Then the framework 7 is fastened to the base 6.
- 2) Then the fiber 3 is more accurately positioned so that the axis 10 of the bore 9 is approximately coaxial with the optical axis 4 of the optoelectronic component 5, by moving it inside the bore 9 by means of a micro manipulator (not represented on the figure). Then the fiber 3 is fastened in the bore 10 by depositing some solidifiable product 17 in the tank 11, with a micro spatula, and then product 17 is solidified.
In the embodiment represented on Figure 1, the surface of the base 6 comprises a groove 15 perpendicular to the optical axis 4 of the optoelectronic component 5. The groove 15 is arranged and construed to receive the framework 7. This latter can slide in the groove 15. A solidifiable product 16 is deposited in the grove 15. For the pre-positioning step, the framework 7 is slid along the groove 15 until the bore axis 10 is approximately coaxial with the optical axis 4 of the optoelectronic component 5. Then the framework 7 is fastened with respect to the groove 15, by solidifying the solidifiable product 16.

In an embodiment (not represented on Figure 1) the tank is a mere cylinder and has a diameter of about 220 micrometers. The shape of the tank 11 is not limited to this example. It may present another shape. However, the cylindrical shape is well adapted to contain and maintain the solidifiable product 17 by capillarity action.

In another embodiment of the tank, represented on Figure 1, the diameter of the tank 11 is greater than 220 micrometers. Thus it is more difficult to maintain the solidifying product 17 in the tank 11 by capillarity action. In order to increase the grip action, surfaces in contact with the product are added, the tank 11 comprises four internal lugs 12 pointed towards the axis of the tank 11.

Depositing a calibrated droplet of solidifying product 17 in the tank 11 is not an easy task. If there is not enough deposited solidifying product 17, it does not completely fill up the duct 13 and the gap between the fiber 9 and the support 7. If there is too much deposited solidifying product 17 some of it spills out of the tank 11 and it creates a falling droplet 18 that draws a part of the product 17 out the duct 13 and out of the gap between the bore 9 and the fiber 3, because of the gravity. In this case, The product 17 may surround the fiber 3 asymmetrically. After solidifying, the spilled out product 17 may create asymmetrical forces around the fiber 3. The whole outer periphery of the fiber 3 is not drawn uniformly in the radial directions because the forces of contraction are dissymmetric. They move the optical fiber 3, and may sometimes even break it. The resulting positioning has not always the required accuracy.
Figures 2 to 5 illustrate this problem that sometime occurs. They represent the progress of the solidifiable product 17 from the tank 11 to the gap between the bore 9 and the fiber 3, when the process does not run well. Figure 2 represents a front view of the framework 7 of the positioning device represented on Figure 1.
Figures 3 to 5 respectively represent a section of this framework 7 along the axis AA, at successive times T1, T2, and T3.

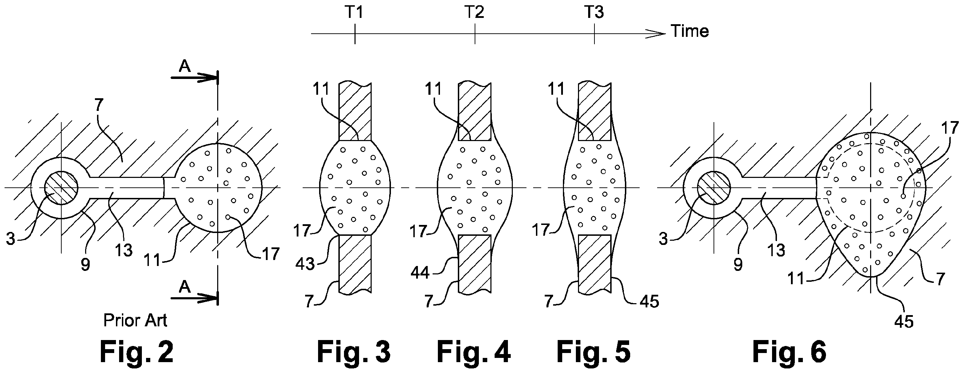

On **Figure 2****,** at time T1, a calibrated droplet of product 17 has just been deposited in the tank 11. The duct 13 and the gap between the fiber 3 and the bore 9 are still empty.
**Figure 3** represents a section of this droplet of product 17 at this time T1. It is rather thick and it wets only the interior of the tank 11. The limit 43 of the wetting is the edge of the tank 11.
**Figure 4** represents a section of this droplet of product 17 at the time T2. It is slimmer because it is spreading outside the tank 11, on the surface of the framework 7. There is a grip action because the product 17 is wetting the rim of the tank 11. The product 17 has spread up to a point 44, and inside the duct 13.
**Figure 5** represents a section of this droplet of product 17 at the time T3. It is still slimmer because it continues spreading outside the tank 11, on the rim around the tank 11, up to a point 45 further than the point 44 with respect to the center of the tank 11. It is further wetting the rim of the tank 11 and inside the duct 13. The grip action and the gravity action create opposed forces. At this step of the spreading, the gravity action overcomes the grip action, and creates a droplet that goes downwards.
**Figure 6** represents a front view of this droplet of product 17 at the time T3. The quantity of product 17 on the rim of the tank 11, up to the point 45, is so much now that the gravity generates a falling droplet that tends to fall downwards. The generation of this droplet empties the gap between the fiber 3 and the bore 9, at least partially. The duct 13 can even be completely emptied, as represented on Figure 6. The fiber cannot be fixed, or is fixed asymmetrically i.e. an accurate positioning is not achieved, in this case.
The purpose of the present invention is to propose a positioning device for accurately aligning and fastening the optical axis of an optical element with the optical axis of an optoelectronic component without this difficulty when the solidifying product is being deposited.

### SUMMARY

According to the invention, a device for aligning the optical axis of an optical element with the optical axis of an optoelectronic component and for fastening the optical element in the resulting position in relation to the optoelectronic component comprises:
- a base construed and arranged to support at least one plane framework,
- a first framework disposed onto said base and comprising:
   -- a bore having a longitudinal axis approximately coaxial to the optical axis of the optoelectronic component, said bore being construed and arranged to receive an optical element,
   -- a tank construed and arranged to contain some solidifiable product,
   -- a duct connected at a first end to said tank and at a second end to said bore so that the solidifiable product can migrate from the tank to the bore by capillarity action;
and is characterized in that said first framework further comprises a slot surrounding the tank for limiting an area where the solidifiable product can spread outside the tank by wetting the framework.

The internal edge of the slot surrounding the tank stops the spreading of the solidifiable product out of the tank, this propagation being due to the wetting phenomenon on the surface of the framework on the rim of the bore. Thanks to this area limitation, the grip action cannot be overcome by the gravity action because the quantity of product that can spread out of the tank is limited below the quantity that is necessary to generate a falling droplet that can empty, at least partially, the duct and the space between the fiber and the bore.
So the solidifying product is always homogeneously distributed around the optical element, if this latter has a cylindrical shape. Thanks to this homogenous repartition, when the solidifying product is solidified around the optical element, forces of contraction are symmetric. So the positioning is always accurate.

### BRIEF DESCRIPTION OF THE DRAWINGS

Other characteristics and advantages of the present invention will become apparent upon reading the following description of embodiments, which are given by way of nonlimiting examples, and in the attached drawings, in which:
- Figures 1- 6, described above, illustrate the prior art.

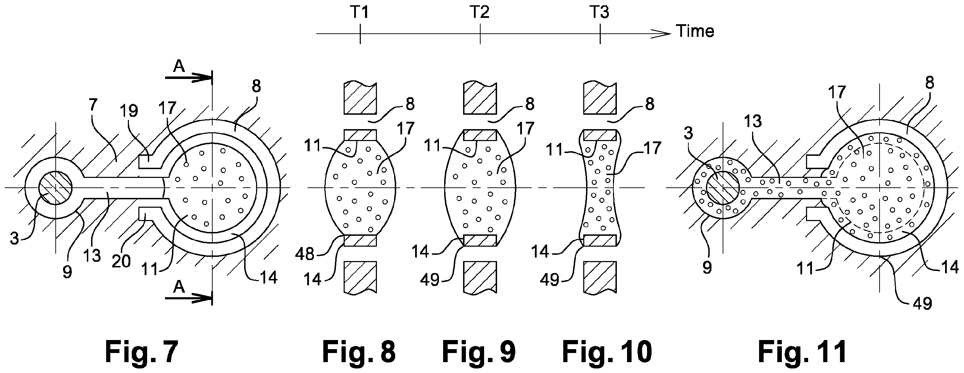

- Figure 7 represents a part of a first embodiment of the device according to the invention.
- Figures 8 to 11 illustrate the progression of the solidifiable product in the embodiment represented on Figure 7.

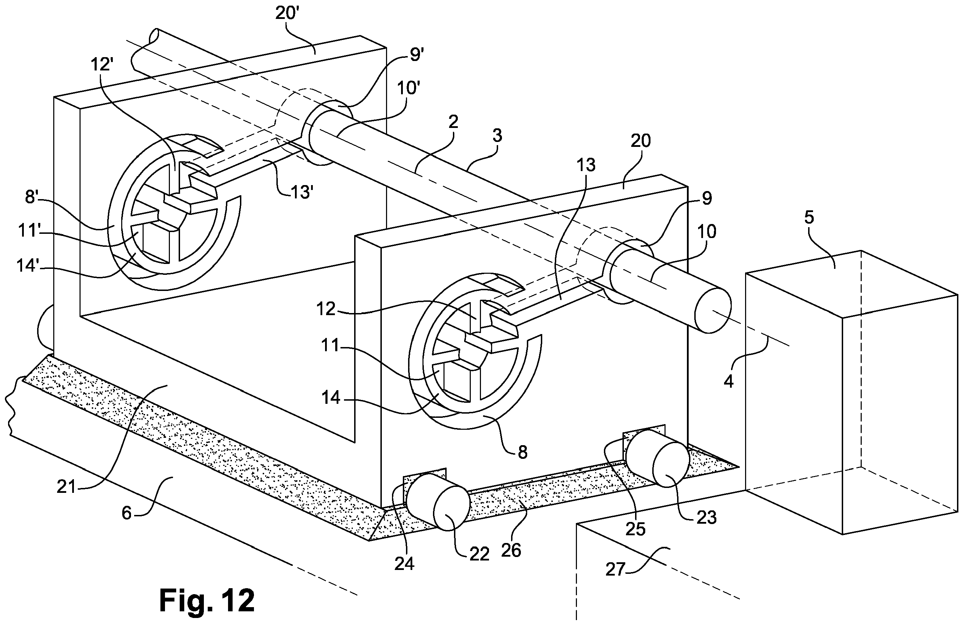

- Figure 12 represents a second embodiment of the device according to the invention.

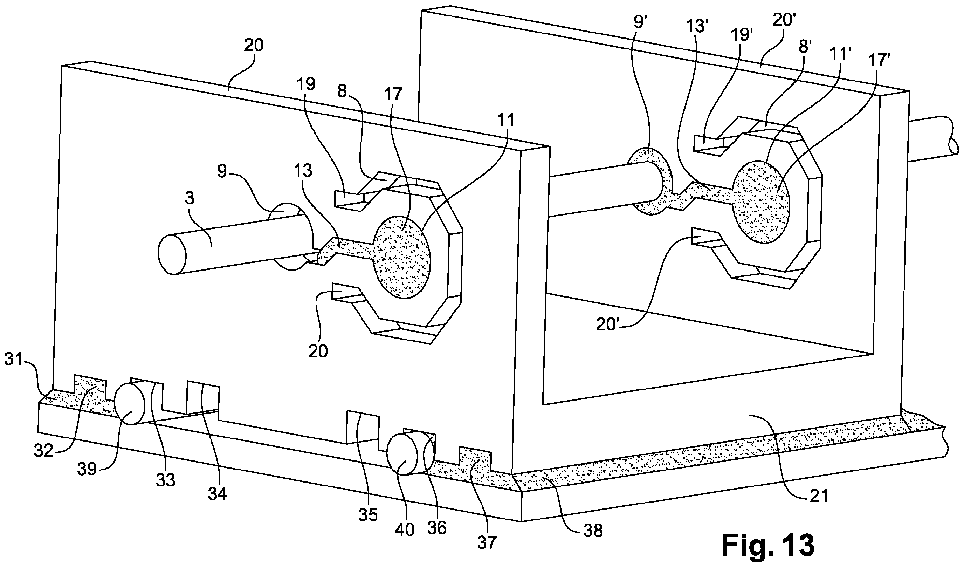

- Figure 13 represents a third embodiment of the device according to the invention.

The same references are used in different figures to designate similar elements.

### DETAILED DESCRIPTION

**Figure 7** represents a part of a first embodiment of the device according to the invention. It comprises a framework 7 comprising:
- A bore 9 being construed and arranged to receive an optical fiber 3, the diameter of the bore 5 being greater than the diameter of the fiber 3;
- A cylindrical tank 11 is cut through the framework 7 and is arranged to contain a solidifiable product 17, that can be melted soft solder or polymerizing glue;
- A linear duct 13 is cut through the support 7 and is connected, at a first end, to said tank 11 and, at a second end, to the bore 9, so that solidifiable product 17 can migrate from the tank 11 to the bore 9 by capillarity action. The duct 13 has a rectangular section. One side of this section is limited by the material of the framework 7 and has a length equal to the thickness of this framework 7. The other side is open on the surface of the framework 7 and has a width smaller than the diameter of the bore 9. The duct 13 can have any orientation, and may be non linear.
The solidifiable product 17 fills the gap between the bore 9 and the fiber 3 by capillarity action. Then the product 17 is solidified for maintaining the fiber 3 in the bore 10, after positioning it.
- A circular slot 8 cut through the support 7 and surrounding the tank 11, preferably at a constant distance. It creates a rim 14 around the tank 11, however the slot 8 is interrupted in the neighborhood of the duct 13. Optionally, it stretches further along the duct 13, by two segments 19, 20 parallel to the duct 13. The solidifiable product 17 can spread outside the tank 11 by wetting the surface of the framework 7 on the rim 14. The slot 8 limits the area where the solidifiable product 17 can spread outside the tank 11 by wetting the framework 7. Because of the empty space in the slot 8, the product 17 grips on the rim 14 up to the inner edge of the slot 8 but cannot spread further. Thanks to this area limitation, the gravity cannot overcome the grip action. It cannot create a droplet creating an asymmetry, or even falling out of the tank 11.

The material of the plate 7 and of the frameworks 20 and 20' is alumina. Preferably, the thickness of the plate 21 is between 100 micrometers and 300 micrometers.
The bore 9 is cylindrical and its diameter is 40 micrometers up 80 micrometers greater than the diameter (125 micrometers) of the optical fiber 3. So the gap between the optical fiber 3 and the bore 9 enables a homogeneous repartition of the solidifying product around the optical fiber 3.
The tank 11 is preferably a mere cylindrical bore and has a diameter comprised between 220 micrometers and 260 micrometers.
The slot 8 has a width at least equal to 60 micrometers, and an inner diameter 120 micrometers greater than the diameter of the tank 11.

In this exemplary embodiment:
- The thickness of the framework is about 130 micrometers.
- The tank 11 is a mere cylinder and has a diameter of 220 micrometers.
- The slot 8 has a constant width of 60 micrometers, and an inner diameter of 340 micrometers.
- The duct 13 has a width of 50 micrometers.
- The segments 19, 20 have lengths of 120 micrometers.

The shape of the tank 11 is not limited to the cylindrical shape. However, the cylindrical shape is well adapted to contain and maintain the solidifiable product 17.

In other embodiments, not represented on figure 7, the diameter of the tank 11 is greater than 220 micrometers. Thus it is more difficult to maintain the product 17 in the tank 11 by grip action. Then, in order to increase the grip action, the tank 11 further comprises four optional internal lugs 12 pointed towards the axis of the tank 11. These four lugs 12 help to maintain the solidifiable product 17 in the tank 11, by grip action. They have lengths almost equal to the radius of the tank 11.

Figures 8 to 11 illustrate the use of this first embodiment of the device according to the invention. They represent the progress of the solidifiable product 17 from the tank 11 to the gap between the bore 9 and the fiber 3. They respectively represent the section along the axis AA of the framework 7, at successive times T1, T2, and T3.

On **Figure 8****,** at time T1, a calibrated droplet of product 17 has just been deposited in the tank 11. The duct 13 and the gap between the fiber 3 and the bore 9 are still empty. The product 17 is wetting the inside of the tank 11 up to the edge 48 of the tank 11, but it does not wet the rim 14.
**Figure 9** represents a section of this droplet of product 17 at the time T2. It is slimmer because it is spreading on the surface of the framework 7, on the rim of the tank 11; and inside the duct 13. The droplet spreads now further and wets all the surface of the rim 14 surrounding the tank 11, up to the point 49 on the inner edge of the slot 8. However the spreading does not go beyond the internal edge of the slot 8, because the edge of the slot 8 prevents the product 17 of wetting further.

**Figure 10** represents a section of this droplet of product 17 at the time T3. It is still slimmer now because the product 17 continues spreading inside of the duct 13 up to the gap between the fiber 3 and the bore 9. It is still wetting the surface of the rim 14 of the tank 11. However the spreading does not go beyond the point 49, on the inner edge of the slot 8, because the edge of the slot 8 prevents the product 17 of wetting further.
**Figure 11** represents a front view of this droplet of product 17 at the time T3. Some product 17 covers the rim 14 of the tank 11, up to the point 49, but it does not go beyond the inner edge of the slot 8, because the empty space of the slot 8 prevents the product 17 of wetting further. Thanks to this spreading area limitation, the grip action cannot be overcome by the gravity action because the quantity of product 17 that can spread out of the tank is limited below the quantity that is necessary to generate a falling droplet that can empty, at least partially, the duct 13 and the space between the fiber 3 and the bore 9. The product 17 completely fills up the gap between the fiber 3 and the bore 9. Thus the fiber 3 will be maintained with symmetrical contraction forces when the product 17 has been solidified, i.e. an accurate positioning will be achieved.

**Figure 12** represents a second embodiment of the device according to the invention. This embodiment aligns the optical axis 2 of an optical fiber 3 with the optical axis 4 of an optoelectronic component 5; and it fastens the optical fiber 3 in relation to an optoelectronic component 5. A plane base 6 comprises a mount 27 arranged and construed to support the optoelectronic component 5.
The plane base 6 supports a plate 21 parallel to the base 6, this plate 21 carrying a first framework 20 and a second framework 20' that are identical. They are similar to the framework 7 represented on the Figure 7 except that their respective slots 8, 8' do not comprise segments 19, 20 along the duct 13. In another embodiment, they could comprise segments 19, 20 along the duct 13, as well.

The first and second frameworks 20, 20' are parallel, and they are perpendicular to the plate 21 so that the plate 21 and the two frameworks 20, 20' constitute a U shaped part. The two frameworks 20, 20' are perpendicular to the axis 2 of the fiber 3.
The plate 21 comprises two parallel and identical grooves 24, 25 parallel to the axis 10 of the bores 9, 9'. These grooves are respectively containing two identical cylinders 22, 23 carrying the plate 21. The diameters of the two cylinders 22, 33 are greater than the depths of the two grooves 24, 25 so that the plate 21 can roll on the base 6. It rolls parallel with the base 6 and perpendicularly to the axis 2 of the fiber 3. A solidifiable product 26 is inserted by capillarity action, in the gap between the base 6 and the plate 21. Then the product 26 is solidified. So this second embodiment enables a prepositioning of the fiber 3 in a direction parallel to the base 6 and perpendicular to the axis 2 of the fiber 3.

For instance, let us consider the first framework 20. It comprises:
- A bore 9 having a longitudinal axis 10 approximately coaxial to the optical axis 4 of the optoelectronic component 5, after a pre-positioning; said bore 9 being construed and arranged to receive an optical fiber 3, the diameter of the bore 9 being greater than the diameter of the fiber 3. For instance the diameter of the bore 9 is 40 to 80 micrometers greater than the diameter of a fiber (125 micrometers in this example). In a preferred embodiment, the bore 9 is cut through the framework 7 by a YAG laser.
- A tank 11 is cut through the support 7 and is arranged to contain a solidifiable product (not represented on the Figure 2 for clarity). This product can be melted soft solder or polymerizing glue. In this second embodiment, the tank 11 is preferably cylindrical and has a diameter of 220 micrometers. It optionally comprises four internal lugs 12 pointed towards the axis of the tank 11. These four lugs 12 help to maintain the solidifiable product in the tank 11 by grip action. The shape of the tank 11 is not limited to this example. However, the cylindrical shape is well adapted to contain and maintain the solidifiable product.
- A duct 13 is cut through the support 7 and is connected, at a first end, to said tank 11 and, at a second end, to the bore 9, so that solidifiable product can migrate from the tank 11 to the bore 9 by capillarity action.

In order to realize the capillarity action, the duct width, on the surface of the framework 7, is about 50 micrometers. The duct 13 may have any orientation, and may be non linear.
The material of the plate 21, the frameworks 20 and 20' is alumina. For example, the thickness of the plate 21 is 1 millimeter; and the thicknesses of the frameworks 20 and 20' are comprised between 100 micrometers and 300 micrometers, for example 130 micrometers.

In a general manner, it could be noted that when the positioning device comprises only one framework as depicted in Figure 7, the thickness of the framework is preferably greater than in a positioning device comprising two frameworks 20, 21 as depicted in Figures 12 and 13.
The tank 11, the duct 13, and the bore 9 have been cut by means of a YAG laser.
In a preferred embodiment, the two cylinders 22, 23 are respectively constituted by two segments of classical optical fiber (Diameter: 125 micrometers).
The respective bores 9 and 9'of the frameworks 20 and 20' have an axis 10 and an axis 10' that are coaxial. These bores 9, 9' are cylindrical and their diameters are 40 micrometer up 80 micrometers greater than the diameter (125 micrometers) of the optical fiber 3. The gap between the optical fiber 3 and the bores 9 and 9' is chosen in so that it provides a homogeneous repartition of the solidifying product around the optical fiber 3.

The use of this positioning device comprises the following steps:
1) The plate 21 is moved on the base 6 so that the axis 10, 10' of the bores 9 and 9' have been pre-positioned approximately coaxial with the optical axis 4 of the optoelectronic component 5. When this pre-positioning has been done, the product 26 is solidified
2) Then a fine positioning is made by moving the fiber 3 inside the bores 9 and 9'. The position of the optical fiber 3 is adjusted in all directions, with a micro manipulator (not represented) until the transferred signal is maximal while the optoelectronic component 5 is operating, i.e. the longitudinal axis 2 of the optical fiber 3 is coaxial with the optical axis 4 of the optoelectronic component 5.
3) When the transferred signal is maximal, two calibrated drops of solidifiable product (not represented) are respectively deposited into the tanks 11 and 11'. The solidifiable product migrates from the tanks 11, 11' to the bores 9, and 9' by capillarity action. During the migration of the solidifiable product, the position of the optical fiber 3 is maintained so that the transferred signal continues to be maximal. As long as the product is not solidified yet, the position of the optical fiber 3 can be corrected.
4) Then the solidifiable product is solidified, for instance by ultra violet light exposure if it is a polymerizable glue. Thanks to presence of the slots 8, 8' the product has not spread beyond the inner edge of these slots 8, 8'. The fiber 3 is 360 degree surrounded by the solidifiable product that has uniformly spread around the fiber 3. So, after the solidification, forces of contraction of the solidified product are symmetric. The optical fiber 3 is not deviated with respect to its position before the solidification. Thus, the optimal positioning is conserved.

**Figure 13** represents a third embodiment of the device according to the invention. This third embodiment is similar to the second embodiment, except a few differences:
- The slots 8 and 8' comprise segments 19, 20 and 19', 20' extending along the ducts 13, 13' respectively.
- The tanks 11, 11' do not comprise any lungs.
- The plate 21 comprises three pairs of identical grooves 32-37, 33-36, 34-35, parallel to the axis 10, 10' of the bores 9 and 9'. Each pair is constituted of two identical grooves adapted for respectively containing two identical rollers 39, 40, all the pairs of grooves having different depths so that each pair of grooves enables to make said pair of rollers support the plate 21 at different distances with respect to the base 6.

In this example, a pair of rollers 39, 40, constituted by two segments of fiber for instance, is inserted in a pair of grooves 33-36. The widths of the grooves are slightly larger than the common diameter of the rollers 39, 40 to enable inserting a roller in any groove.
The depths are different so that one can adjust the position of the plate 21 with respect to the plate 6, by choosing a pair of grooves among the pairs:
32-37, 33-36, 34-35, and inserting the two rollers 39, 40 in the chosen pair of grooves. Then a solidifiable product 31 is deposited between the base 6 and the plate 21 by capillarity action. Then the product 31 is solidified. So this third embodiment enables a prepositioning of the fiber 3 in the direction perpendicular to the base 6, in addition to the prepositioning in a direction parallel to the base 6 enabled by the rollers 39, 40( As described with reference to figure 12).

Remark: This Figure 13 represents a solidifiable product 17 beginning to spread into the duct 13; and a solidifiable product 17' having filled up all the duct 13' and the gap between the fiber 3 and the bore 9'.

The present invention is not limited to the described embodiments, but rather is subject to many variants accessible to the person skilled in the art without departing from the invention. In particular, without departing from the invention, it is possible to position more many fibers by means of several bores in a same framework, each bore being surrounded by a respective slot.
The optical fiber can be replaced by another optical component; a lens, for instance.

## Claims

1. A device for aligning the optical axis (2) of an optical element (3) with the optical axis (4) of an optoelectronic component (5) and for fastening the optical element (3) in the resulting position in relation to the optoelectronic component (5), comprising:
- a base (6) construed and arranged to support at least one plane framework (7; 20),
- a first framework (7) disposed onto said base (6) and comprising:
-- a bore (9) having a longitudinal axis (10) approximately coaxial to the optical axis (4) of the optoelectronic component (5), said bore (9) being construed and arranged to receive an optical element (3),
-- a tank (11) construed and arranged to contain some solidifiable product (12),
-- a duct (13) connected at a first end to said tank (11) and at a second end to said bore (9) so that the solidifiable product (12) can migrate from the tank (11) to the bore (9) by capillarity action;
**and being characterized in that** said first framework (7) further comprises a slot (8, 8') surrounding the tank (11) for limiting an area (14) where the solidifiable product (17) can spread outside the tank (11) by wetting the framework (7).

2. A device according to the claim 1, wherein the slot (8) comprises two segments (19, 20) respectively extending the slot along two sides of the duct (13).

3. A device according to the claim 1, wherein the tank (11) further comprises internal lungs (12) for helping to keep the product by grip action.

4. A device according to one of the preceding claims, further comprising a second framework (20') identical to the first one (20) and disposed so that the bores (9, 9') of the first and second frameworks have a same longitudinal axis (2) for receiving a same optical element (3).

5. A device according to claim 4, wherein the first and second frameworks (20, 20') are fastened on a plate (21) so that the positioning device has a U shape.

6. A device according to the claim 5, wherein the plate (21) is adapted to be fastened to the base (6) by a solidifiable product (26; 31).

7. A device according to the claim 5, wherein the plate (21) comprises at least one pair of identical grooves (24, 25) adapted for respectively containing two identical rollers (22, 23), the depths of grooves being lower than the diameters of the rollers; and these grooves being parallel to the axis (10, 10') of the two bores (9, 9').

8. A device according to claim 7, wherein the plate (21) comprises several pairs of grooves (32-37, 33-36, 34-35), each pair being constituted of two identical grooves adapted for respectively containing two identical rollers (39, 40), all the pairs of grooves having different depths so that different pairs of grooves enable to make said pair of rollers support the plate (21) at different distances with respect to the base (6).

9. A device according to one of the preceding claims, wherein the width of the duct (13) on the surface of the framework (7) is smaller than the diameter of the bore (9).

10. A device according to any one of the preceding claims, wherein the bore diameter is 40 micrometers up 80 micrometers greater than the optical element diameter.

11. A device according to any one of the preceding claims, wherein the duct width is about 50 micrometers.

12. A device according to any one of the preceding claims, wherein said solidifiable product is melted soft solder or polymerizing glue.

13. A device according to any one of the preceding claims, wherein the thickness of a framework is comprised between 100 micrometers and 300 micrometers.

## Patentansprüche

1. Vorrichtung zum Ausrichten der optischen Achse (2) eines optischen Elements (3) mit der optischen Achse (4) einer optoelektronischen Komponente (5) und zum Befestigen des optischen Elements (3) in der resultierenden Position bezüglich der optoelektronischen Komponente (5), wobei die Vorrichtung Folgendes aufweist:
- eine Basis (6), die zum Halten von mindestens einem ebenen Rahmen (7; 20) ausgebildet und angeordnet ist,
- einen ersten Rahmen (7), der an der Basis (6) angebracht ist und der Folgendes aufweist:
-- eine Bohrung (9) mit einer Längsachse (10) ungefähr koaxial zur optischen Achse (4) der optoelektronischen Komponente (5), wobei die Bohrung (9) zum Aufnehmen eines optischen Elements (5) ausgebildet und angeordnet ist,
-- einen Behälter (11), der zum Aufnehmen eines verfestigbaren Produkts (12) ausgebildet und angeordnet ist,
-- einen Kanal (13), der mit einem ersten Ende mit dem Behälter (9) und mit einem zweiten Ende mit der Bohrung (9) verbunden ist, sodass das verfestigbare Produkt (12) durch eine Kapillaranziehungswirkung vom Behälter (11) in die Bohrung (9) wandern kann;
**dadurch gekennzeichnet,**
**dass** der erste Rahmen (7) weiterhin einen Schlitz (8, 8') aufweist, der den Behälter (11) umgibt, um ein Gebiet (14) zu begrenzen, in dem sich das verfestigbare Produkt (17) außerhalb des Behälters (11) durch Anfeuchten des Rahmens (7) ausbreiten kann.

2. Vorrichtung nach Anspruch 1,
wobei der Schlitz (8) zwei Segmente (19, 20) aufweist, die den Schlitz jeweils an zwei Seiten des Kanals (13) verlängern.

3. Vorrichtung nach Anspruch 1,
wobei der Behälter (11) weiterhin innere Vorsprünge (12) aufweist, um das Halten des Produkts durch eine Greifwirkung zu unterstützen.

4. Vorrichtung nach einem der folgenden Ansprüche,
die weiterhin einen zweiten Rahmen (20') aufweist, der zu dem ersten Rahmen (20) identisch ist und derart angeordnet ist, dass die Bohrungen (9, 9') des ersten und zweiten Rahmens die gleiche Längsachse (2) haben, um ein gleiches optisches Element (3) aufzunehmen.

5. Vorrichtung nach Anspruch 4,
wobei der erste und zweite Rahmen (20, 20') an einer Platte (21) befestigt sind, sodass die Positionierungsvorrichtung eine U-Form hat.

6. Vorrichtung nach Anspruch 5,
wobei die Platte (21) dazu ausgelegt ist, an der Basis (6) mit einem verfestigbaren Produkt (26; 31) befestigt zu werden.

7. Vorrichtung nach Anspruch 5,
wobei die Platte (21) mindestens ein Paar von identischer Nuten (24, 25) aufweist, die so ausgelegt sind, dass sie jeweils zwei identische Rollen (22, 23) aufnehmen, wobei die Tiefe der Nuten geringer ist als der Durchmesser der Rollen; und wobei diese Nuten parallel zur Achse (10, 10') der beiden Bohrungen (9, 9') sind.

8. Vorrichtung nach Anspruch 7,
wobei die Platte (21) mehrere Paare von Nuten (32 - 37, 33 - 36, 34 - 35) aufweist, wobei ein jedes Paar von zwei identischen Nuten gebildet wird, die so ausgelegt sind, dass sie jeweils zwei identische Rollen (39, 40) enthalten, wobei alle Paare von Nuten verschiedene Tiefen aufweisen, sodass verschiedene Paare von Nuten es ermöglichen, dass das Paar von Rollen die Platte (21) in unterschiedlichen Abständen bezüglich der Basis (6) abstützt,

9. Vorrichtung nach einem der vorhergehenden Ansprüche,
wobei die Breite des Kanals (13) an der Oberfläche des Rahmens (7) kleiner ist als der Durchmesser der Bohrung (9).

10. Vorrichtung nach einem der vorhergehenden Ansprüche,
wobei der Bohrungsdurchmesser 40 µm bis 80 µm größer ist als der Durchmesser des optischen Elements.

11. Vorrichtung nach einem der vorhergehenden Ansprüche,
wobei die Kanalbreite in etwa 50 µm beträgt.

12. Vorrichtung nach einem der vorhergehenden Ansprüche,
wobei das verfestigbare Produkt ein geschmolzenes Weichlot oder ein Polymerisationskleber ist.

13. Vorrichtung nach einem der folgenden Ansprüche,
wobei die Dicke eines Rahmens zwischen 100 µm und 300 µm beträgt.

## Revendications

1. Dispositif d'alignement de l'axe optique (2) d'un élément optique (3) avec l'axe optique (4) d'un composant optoélectronique (5) et de fixation de l'élément optique (3) dans la position résultante par rapport au composant optoélectronique (5), comprenant :
une base (6) construite et disposée pour supporter au moins un encadrement plan (7 ; 20) ;
un premier encadrement (7) disposé sur ladite base (6) et comprenant :
un alésage (9) présentant un axe longitudinal (10) approximativement coaxial avec l'axe optique (4) du composant optoélectronique (5), ledit alésage (9) étant construit et disposé pour recevoir un élément optique (3) ;
une cuve (11) construite et disposée pour contenir du produit solidifiable (12) ;
un conduit (13) connecté à une première extrémité à ladite cuve (11) et à une deuxième extrémité audit alésage (9) de telle sorte que le produit solidifiable (12) peut migrer de la cuve vers alésage par action capillaire ;
le dispositif étant **caractérisé en ce que** le premier encadrement (7) comprend en outre une fente (8, 8') entourant la cuve (11) pour délimiter une zone (14) dans laquelle le produit solidifiable (17) peut s'étaler en-dehors de la cuve (11) en mouillant l'encadrement (7).

2. Dispositif selon la revendication 1, selon lequel la fente (8) comprend deux segments (19, 20) qui étendent la fente le long de deux côtés du conduit (13).

3. Dispositif selon la revendication 1, selon lequel la cuve (11) comprend en outre des poumons internes (12) destinés à assister la tenue du produit par serrage.

4. Dispositif selon l'une quelconque des revendications précédentes, comprenant en outre un deuxième encadrement (20') identique au premier encadrement (20) et disposé de telle sorte que les alésages (9, 9') des premier et deuxième encadrements présentent un même axe longitudinal (2) pour la réception d'un même élément optique (3).

5. Dispositif selon la revendication 4, selon lequel les premier et deuxième encadrements (20, 20') sont fixés à une plaque (21) de sorte que le dispositif de positionnement présente une forme en « U ».

6. Dispositif selon la revendication 5, selon lequel la plaque (21) est adaptée à être fixée à la base (6) par le biais d'un produit solidifiable (26, 31).

7. Dispositif selon la revendication 5, selon lequel la plaque (21) comprend au moins une paire de rainures identiques (24, 25) adaptées pour contenir respectivement deux rouleaux identiques (22, 23), les profondeurs des rainures étant inférieures au diamètres des rouleaux ; et les rainures étant parallèles à l'axe (10, 10') des deux alésages (9, 9').

8. Dispositif selon la revendication 7, selon lequel la plaque (21) comprend plusieurs paires de rainures (32-37, 33-36, 34-35), chaque paire étant constituée de deux rainures identiques adaptées pour contenir respectivement deux rouleaux identiques (39, 40), toutes les paires de rainures présentant des profondeurs différentes de telle sorte que de différentes paires de rainures permettent aux paires de rouleaux de supporter la plaque (21) à des distances différentes par rapport à la base (6).

9. Dispositif selon l'une quelconque des revendications précédentes, selon lequel la largeur du conduit (13) sur la surface de l'encadrement (7) est plus petite que le diamètre de l'alésage (9).

10. Dispositif selon l'une quelconque des revendications précédentes, selon lequel le diamètre de l'alésage est de 40 micromètres à 80 micromètres plus important que le diamètre de l'élément optique.

11. Dispositif selon l'une quelconque des revendications précédentes, selon lequel la largeur du conduit est d'environ 50 micromètres.

12. Dispositif selon l'une quelconque des revendications précédentes, selon lequel ledit produit solidifiable est une soudure tendre fondue ou une colle polymérisante.

13. Dispositif selon l'une quelconque des revendications précédentes, selon lequel l'épaisseur d'un encadrement est comprise entre 100 micromètres et 300 micromètres.
